(19) Europäisches Patentamt
European Patent Office
Office européen des brevets

(11) **EP 1 704 969 A1**

(12) **EUROPEAN PATENT APPLICATION**

(43) Date of publication:
**27.09.2006 Bulletin 2006/39**

(51) Int Cl.:
**B25J 9/04** (2006.01)

(21) Application number: **06004141.5**

(22) Date of filing: **01.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **25.03.2005 JP 2005089623**

(71) Applicant: **FANUC LTD**
**Minamitsuru-gun,**
**Yamanashi 401-0597 (JP)**

(72) Inventors:
• **Hariki, Kazuo**
**Minamitsuru-gun,**
**Yamanashi, 401-0511 (JP)**

• **Oda, Masaru**
**Room 12-104 FANUC**
**Minamitsuru-gun**
**Yamanashi 401-0511 (JP)**
• **Ochiishi, Yoshinori**
**mura**
**Minamitsuru-gun**
**Yamanashi 401-0511 (JP)**
• **Ueda, Tetsuji**
**Room 6-304 FANUC**
**Minamitsuru-gun**
**Yamanashi 401-0511 (JP)**

(74) Representative: **Thum, Bernhard**
**Wuesthoff & Wuesthoff**
**Patent- und Rechtsanwälte**
**Schweigerstrasse 2**
**81541 München (DE)**

(54) **Robot handling system**

(57) A robot handling system (10) using a robot hand (30) to convey a workpiece (40), provided with a first wrist element (24) at a front end (12a) of an arm (12) of the robot, a second wrist element (25) perpendicular to this, a third wrist element (26) perpendicular to this, and a connecting means (60) connecting the third wrist element and a hand body (31) of the robot hand, the hand body being arranged so that an inertia moment of the hand body about a vertical axial line becomes larger than the inertia moments of the hand body about two mutually perpendicular horizontal axial lines, the connecting means (60) connects the third wrist element (26) and hand body (31) so that a third axial line of the third wrist element (J6) and the hand body are arranged in a horizontal plane, and a posture of the hand body is changed about the vertical axial line in the state with the third axial line of the third wrist element arranged in a horizontal plane. Due to this, the robot hand can be made to rotate over the limit of the allowable inertia moment.

EP 1 704 969 A1

**Description**

BACKGROUND OF THE INVENTION

1. Field of the Invention

The present invention relates to a robot handling system for conveying a workpiece by a robot hand attached to a wrist of a robot.

2. Description of the Related Art

In the past, a robot hand provided at the wrist of a robot has been used to convey and position workpieces. There are various types of robot hands. When conveying a workpiece to or from a location too narrow for the wrist of the robot to be inserted, when the distance from the robot to the workpiece was long and therefore the stroke of the arm of the robot was insufficient, etc., a robot hand having an elongated hand body provided with a holding means at its front end was used.

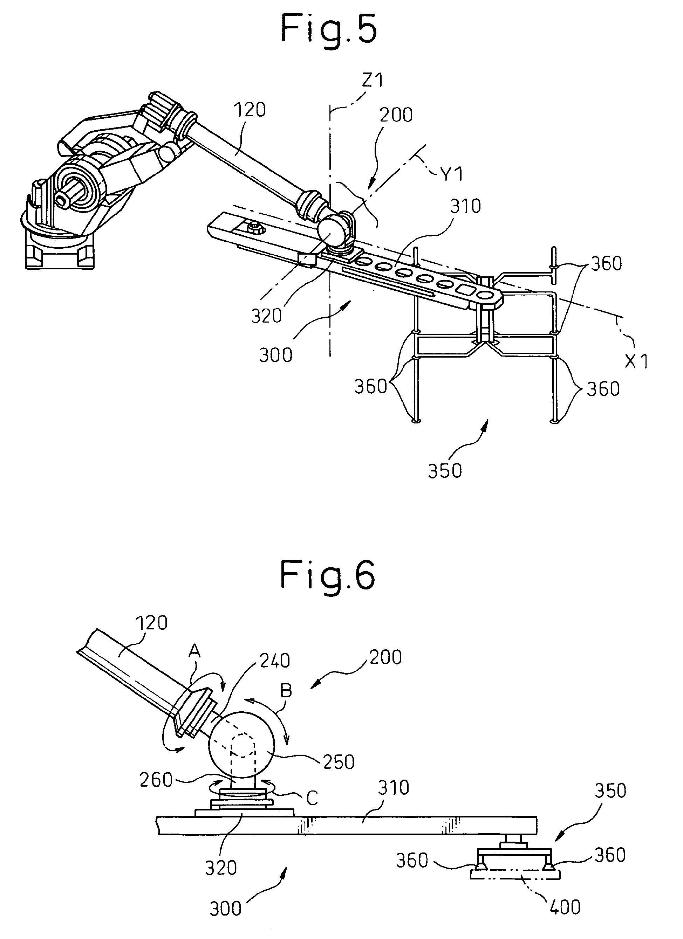

FIG. 5 is a perspective view of an arm type robot of the prior art as disclosed in Japanese Patent Publication (A) No. 2001-30190 and Japanese Patent Publication (A) No. 2002-307342. As shown in FIG. 5, the front end of the arm of the robot 120 has a wrist 200 attached to it. This wrist is connected through a connector 320 to a robot hand 300. As illustrated, the hand body 310 of the robot hand 300 is an elongated flat member arranged in a horizontal plane. Further, the front end of the robot hand 300 is provided with a holding means 350. This holding means 350 is provided with a plurality of suction pads 360.

Further, FIG. 6 is a schematic side view showing the hand body 310 in a simplified manner. As shown in FIG. 6, a shaft 240 of the wrist 200 can rotate about an axial line of the arm 120 as shown by the arrow A. Further, the wrist 200 includes a shaft 250 able to rotate about an axial line perpendicular to the shaft 240 as shown by the arrow B and a shaft 260 able to rotate about an axial line perpendicular to the shaft 250 as shown by the arrow C. Therefore, the shaft 260 of the wrist 200 is connected perpendicular to the longitudinal direction of the hand body 310. By the individual rotation operations of these shafts 240, 250, and 260 shown by the arrows A, B, and C and suitable combinations of these rotation operations, the robot hand 300 is made to operate. The hand body 310 of the robot hand 300 is an elongated flat member, so the robot hand 300 can easily enter narrow locations where the wrist 200 cannot enter, for example, inside a press machine etc. Further, it is possible to compensate for the insufficient stroke of the arm 120 by exactly the length of the hand body 310. As disclosed in Japanese Patent Publication (A) No. 2001-30190 and Japanese Patent Publication (A) No. 2002-307342, the same is true when the hand body 310 is comprised of a plurality of links.

The workpieces which can be conveyed by a robot are limited by the carriable weight of the wrist of the robot, the allowable inertia moment or allowable inertia of the wrist 200, etc. For this reason, it is considered necessary that the workpiece 400 to be carried (see FIG. 6) be within the carriable weight of the wrist of the robot and that the inertia moment of the robot hand 300 be within the allowable inertia moment of the wrist of the robot. Further, if the inertia moment of the robot hand 300 exceeds the allowable inertia moment, the robot hand 300 cannot rotate and the workpiece 400 can no longer be conveyed.

In the case of the robot of the prior art explained with reference to FIG. 5 and FIG. 6, mutually perpendicular axial lines X1, Y1, and Z1 are set near the connector 320. As will be understood from FIG. 5, the axial line X1 is included in a horizontal plane and is parallel to the longitudinal direction of the hand body 310, the axial line Y1 is an axial line present in the same horizontal plane and is perpendicular to the axial line X1, and the axial line Z1 is perpendicular to these axial lines X1 and Y1. Further, if the inertia moments about these axial lines X1, Y1, and Z1 are designated as $IX1$, $IY1$, and $IZ1$, since the hand body 310 of the robot hand 300 is an elongated flat member arranged in a horizontal plane, in these inertia moments $IX1$, $IY1$, and $IZ1$, the relationship $IZ1>IY1>IX1$ stands.

That is, the inertia moment $IZ1$ about the axial line Z1 is the largest. As will be understood from FIG. 5 and FIG. 6, the shaft 260 is connected perpendicularly to the hand body 310, so this inertia moment $IZ1$ is generated when only the shaft 260 rotates the robot hand 300 (and workpiece 400). In other words, the rotation operation accompanied with the largest inertia moment $IZ1$ is performed only by the shaft 260. Note that the other inertia moments $IX1$ and $IY1$ are generated when both the shafts 240 and 250 or the shaft 250 alone rotates the robot hand 300 (and workpiece 400).

In this way, since the inertia moment $IZ1$ is larger than the other inertia moments $IX1$ and $IY1$, when making the robot hand 300 rotate about the shaft 260, the inertia moment $IZ1$ will often exceed the allowable inertia moment. Therefore, the robot hand 300 will be unable to rotate and the workpiece 400 will easily become unable to be conveyed.

The present invention was made in consideration of this situation and has as its object to provide a robot handling system enabling a robot hand to be rotated over the limitations due to the allowable inertia moment.

SUMMARY OF THE INVENTION

To achieve the above-mentioned object, according to a first described aspect of the invention, there is provided a robot handling system using a robot hand to convey a workpiece, provided with a first wrist element provided at a front end of an arm of the robot so as to be rotatable about a first axial line in the arm longitudinal direction, a second wrist element provided at the first wrist element so as to be rotatable about a second axial line substantially perpendicular to the first axial line, a third wrist element provided at the second wrist element so as to be rotatable about a third axial line substantially perpendicular to the second axial line, and a connecting means connecting the third wrist element and a hand body of the robot hand, the hand body being arranged so that an inertia moment of the hand body about the vertical axial line becomes larger than the inertia moments of the hand body about the two mutually perpendicular horizontal axial lines, the connecting means connecting the third wrist element and the hand body so that the third axial line of the third wrist element and the hand body are arranged in a horizontal plane, and a posture of the hand body being changed about the vertical axial line in the state with the third axial line of the third wrist element arranged in the horizontal plane.

That is, in the first aspect of the invention, when changing the posture of the hand body about the vertical axial line in the state with the third axial line of the third wrist element being in the horizontal direction, the load of the robot hand (and workpiece) is supported compositely by both of the first wrist element and second wrist element. Therefore, the inertia moment about the vertical axial line differs from the case of the prior art supporting it by only the third wrist element (shaft 260) and is dispersed by both the first wrist element and second wrist element. Therefore, even with a relatively heavy workpiece, it becomes possible to make the robot hand rotate over the limit imposed by the allowable inertia moment in the case of the prior art.

According to a second aspect of the invention, there is provided a robot handling system using a robot hand to convey a workpiece, provided with a first wrist element provided at a front end of an arm so as to be rotatable about a first axial line in the arm longitudinal direction, a second wrist element provided at the first wrist element so as to be rotatable about a second axial line substantially perpendicular to the first axial line, a third wrist element provided at the second wrist element so as to be rotatable about a third axial line substantially perpendicular to the second axial line, and a connecting means connecting the third wrist element and a hand body of the robot hand, the hand body being arranged so that an inertia moment of the hand body about the axial line perpendicular to a first plane at which the hand body is arranged becomes larger than the inertia moments about two mutually perpendicular axial lines included in the first plane, the connecting means connecting the third wrist element and the hand body so that a second plane in which the third axial line of the third wrist element is included and the first plane become parallel, and a posture of the hand body being changed about the axial line perpendicular to the first plane in the state with the third axial line of the third wrist element being included in the second plane.

That is, in the second aspect of the invention, when changing the posture of the hand body about the axial line perpendicular to the first plane in the state with the third axial line of the third wrist element being in the second plane, the load of the robot hand (and workpiece) is supported compositely by both of the first wrist element and second wrist element. Therefore, the inertia moment about the axial line differs from the case of the prior art supporting it by only the third wrist element (shaft 260) and is dispersed by both the first wrist element and second wrist element. Therefore, even with a relatively heavy workpiece, it becomes possible to make the robot hand rotate over the limit imposed by the allowable inertia moment in the case of the prior art.

According to a third aspect of the invention, there is provided the first or second aspect of the invention wherein the connecting means is an L-shaped bracket.

That is, in the third aspect of the invention, one surface of the L-shaped bracket supports the third wrist element and the other surface perpendicular to that one surface supports the hand body. Therefore, it is possible to arrange the third axial line of the third wrist element and the hand body in a horizontal plane and possible to make the second surface and the first surface parallel with each other by a connecting means of a relatively simple configuration.

According to a fourth aspect of the invention, there is provided any of the first to third aspects of the invention wherein the hand body of the robot hand is an elongated flat member and a plate-shaped workpiece processed in a first press machine is taken out in a state held generally horizontal and conveyed to a second press machine.

That is, in the fourth aspect, the hand body of the robot hand can be easily made to advance or retract into the narrow space of a press machine in an open state and the workpiece can be quickly conveyed from the first press machine to the second press machine.

According to the above aspects of the invention, the common effect can be exhibited that the robot hand can be made to rotate over the limitations imposed by the allowable inertia moment.

Further, according to the third aspect of the invention, the effect can be exhibited of making the connecting means relatively simple.

Further, according to the fourth aspect, the effect can be exhibited that a workpiece can be conveyed quickly from a first press machine to a second press machine.

BRIEF DESCRIPTION OF THE DRAWINGS

The object, features, and advantages of the present invention and other objects, features, and advantages will become clearer from the detailed description of typical embodiments of the present invention shown in the attached drawings, wherein

FIG. 1 is a perspective view of a robot provided with a robot handling system according to the present invention;
FIG. 2 is an enlarged side view showing the area around the wrist of a robot enlarged;
FIG. 3 is a schematic view showing the hand body simplified;
FIG. 4 is a perspective view showing an example of application of a robot according to the present invention;
FIG. 5 is a perspective view showing an arm type robot of the prior art; and
FIG. 6 is a schematic side view showing a hand body of the prior art in a simplified manner.

DETAILED DESCRIPTION

Below, embodiments of the present invention will be explained with reference to the attached_drawings. In the following drawings, the same members are assigned the same reference notations. To facilitate understanding, these drawings are suitably changed in scale.

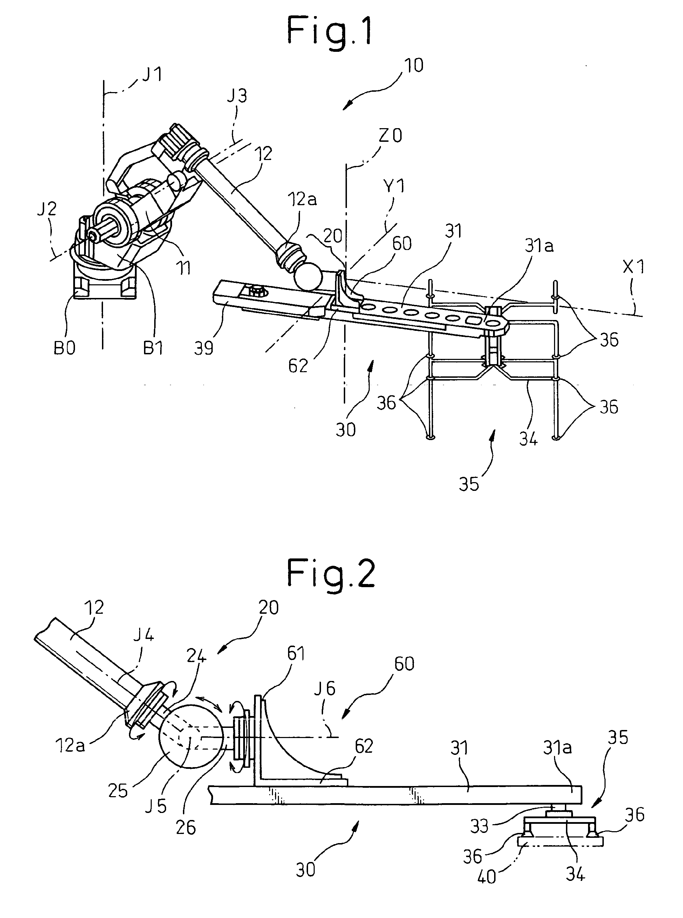

FIG. 1 is a perspective view of a robot provided with the robot handling system according to the present invention. In a vertical multi-articulated type robot 10 shown in FIG. 1, a turning body B1 able to rotate about an axial line J1 is set on a base B0. The turning body B1 is connected to an arm 11 able to rotate about an axial line J2. This arm 11 is connected to an arm 12 able to rotate about an axial line J3. As illustrated, the front end 12a of the arm 12 is provided with a wrist 20 of the robot 10.

FIG. 2 is an enlarged side view showing the area around the wrist of a robot enlarged. This wrist 20 is formed so as to operate by three degrees of freedom. As shown in FIG. 2, the shaft 24 of the wrist 20 is concentric with the arm 12 and is provided on the front end 12a of the arm 12 so as to rotate about the axial line J4. Further, the wrist 20 has a shaft 25 rotating about an axial line J5 perpendicular to the shaft 24 and a shaft 26 rotating about an axial line J6 perpendicular to this shaft 25. Therefore, the robot 10 of the present invention is a six-axis configuration vertical multi-articulated type robot operating about the axial lines J1 to J6. The robot 10 is designed to operate about the axial lines J1 to J6 by a not shown robot control system.

Further, as shown in FIG. 1 and FIG. 2, the front end of the shaft 26 is connected by a connecting member 60 to a hand body 31 of the robot hand 30. In particular, as will be understood from FIG. 2, the connecting member 60 is a substantially L-shaped bracket provided with two mutually perpendicular surfaces 61 and 62. In the illustrated embodiment, one surface 61 of the connecting member 60 is connected to the front end of the shaft 26, while the other surface 62 of the connecting member 60 is connected to the hand body 31 by screws etc. As explained later, the hand body 31 of the robot hand 30 is an elongated flat member, so if the connecting member 60 is used to connect the shaft 26 and hand body 31, the shaft 26 becomes substantially parallel to the longitudinal direction of the hand body 31. Therefore, when the hand body 31 is arranged in a horizontal plane, the shaft 26 of the wrist 20 becomes arranged in another horizontal plane parallel to this horizontal plane. Note that the connecting member 60 does not necessarily have to be an L-shaped bracket and may also be another member able to support the shaft 26 in parallel with respect to the longitudinal direction of the hand body 31.

In the illustrated embodiment, the hand body 31 of the robot hand 30 is an elongated flat member arranged in a horizontal plane. The front end 31a of the hand body 31 is provided with a holding member 35 via a connector 33. The holding member 35 includes a frame 34 connected to the connector 33. The frame 34 is provided at a plurality of predetermined positions of its edge with suction pads 36. These suction pads 36 can pick up by suction a workpiece 40 shown by the imaginary line in FIG. 2. Note that this workpiece 40 is assumed to be within the carriable weight of the wrist 20 of the robot 10. Further, the base end of the hand body 31 is provided with a counterweight 39. Due to this, at the time of rotation of the robot hand 30, the counterweight 39 balances with the holding member 35 (and workpiece 40).

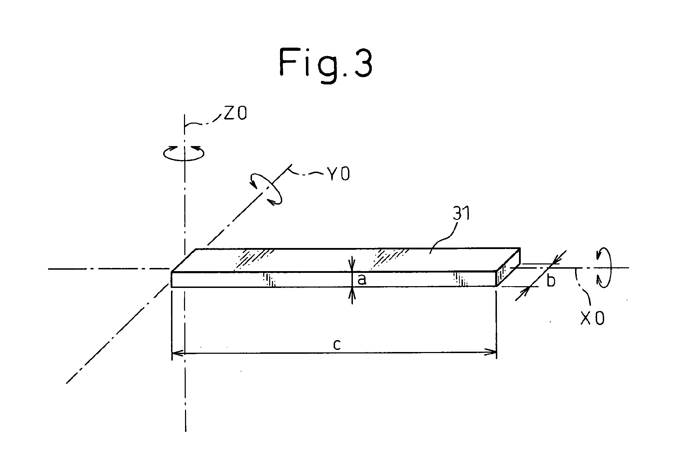

FIG. 3 is a schematic view of the hand body 31 shown simplified. To facilitate understanding, in FIG. 3, the holding member 35, workpiece 40, counterweight 39, etc. are omitted. As explained above, the hand body 31 of the robot hand 30 is an elongated flat member arranged in a horizontal plane. In FIG. 3, the hand body 31 is drawn as a rectangular solid. Further, mutually perpendicular axial lines X0, Y0, and Z0 are set as illustrated near the connecting member 60 (not shown in FIG. 3). The axial line X0 is included in a horizontal plane and is parallel with the longitudinal direction of the hand body 31, the axial line Y0 is an axial line present in the same horizontal plane and is perpendicular to the axial line X0, and the axial line Z0 is perpendicular to these axial lines X0 and Y0.

Further, the Z0 direction side of the hand body 31 is designated as the side a, the Y0 direction side as the side b, and the X0 direction side as the side c (a<b«c). Here, the inertia moments IX0, IY0, and IZ0 about these axial lines X0, Y0, and Z0 are shown by the following equation (1) to equation (3).

$$IX0 = (a^2+b^2) \ M/12 \qquad\qquad (1)$$

$$IY0 = (a^2+4c^2) \ M/12 \qquad\qquad (2)$$

$$IZ0 = (b^2+4c^2) \ M/12 \qquad\qquad (3)$$

Note that M is a constant determined in accordance with the weight of the hand body 31 and holding member 35 (and workpiece 40). Further, the sides a, b, and c of the hand body 31 are in the relationship a<b«c. Therefore, the inertia moments IX0, IY0, and IZ0 expressed by equations (1) to (3) are in the relationship of IX0<<IY0<IZ0, and the inertia moment IZ1 about the axial line Z1 is the largest.

Note that when the hand body 310 of the robot of the prior art explained with reference to FIG. 5 and FIG. 6 is present in a horizontal plane, the shaft 260 is vertically oriented, so the rotation operation accompanied with the largest inertia moment IZ1 (corresponding to IZ0) was performed only by the shaft 260. As a result, when this inertia moment IZ1 exceeded the allowable inertia moment, the situation arose that the robot hand 300 could no longer rotate about the Z1 axis.

As opposed to this, in the robot 10 according to the present invention, since the substantially L-shaped connecting member 60 is used to connect the shaft 26 and the hand body 31, when the hand body 31 of the robot hand 30 is in a horizontal plane, the shaft 26 also generally directs in the horizontal direction. For this reason, as will be understood from FIG. 1 and FIG. 2, the rotation operation of the robot hand 30 about Z0 accompanied with the inertia moment IZ0 is performed compositely by both the shaft 24 and the shaft 25. Therefore, in the present invention, the load and inertia moment of the robot hand 30 (and workpiece 40) are dispersed by these shafts 24 and 25. That is, when rotating the robot hand 30, the shaft 24 and shaft 25 support the robot hand 30 (and workpiece 40) in a composite manner, so even when accompanied by a relatively heavy workpiece 40, the robot hand 30 can be rotated over the limit imposed by the allowable inertia moment in the case of the prior art and, as a result, a relatively heavy workpiece 40 can be conveyed.

Note that in the robot 10 according to the present invention, the rotation operation of the robot hand 30 about the axial line X0 is performed only by the shaft 26, while the rotation operation of the robot hand 30 about the axial line Y0 is performed only by the shaft 25 or is performed compositely by the shaft 24 and the shaft 25. The inertia moments IX0 and IYO about these axial lines X0 and Y0 are smaller than the inertia moment IZ0 about the axial line Z0, so rotation about these axial lines X0 and Y0 will never become impossible before rotation about the axial line Z0 becomes impossible.

Further, in the explained embodiment with reference to the drawings, the hand body 31 of the robot hand 30 is an elongated flat member arranged in a horizontal plane, but the present invention may also be applied even when using a hand body 31 of another shape where the inertia moment IZ0 becomes larger than the inertia moments IX0 and IYO.

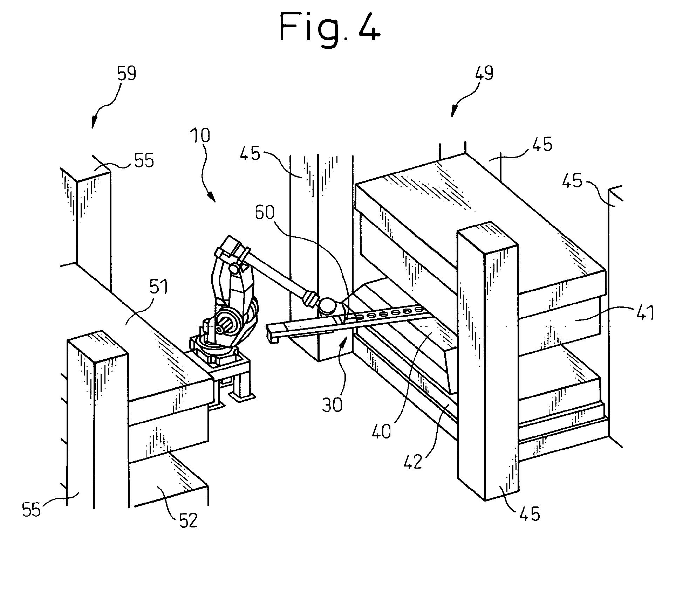

FIG. 4 is a perspective view showing an example of application of the robot according to the present invention. FIG. 4 shows a press machine 49 provided with an upper die 41 and a lower die 42. The upper die 41 of the press machine 49 slides along four posts 45 whereby the press machine 49 opens. Further, a press machine 59 provided with an upper die 51 sliding along posts 55 and a lower die 52 in the same way as the press machine 49 is arranged adjoining the press machine 49. As shown in FIG. 4, the robot 10 according to the present invention is arranged between the press machine 49 and the press machine 59.

The hand body 31 of the robot hand 30 of the robot 10 is an elongated flat member, so the robot hand 30 can easily advance into the relatively narrow space between the upper die 41 and the lower die 42 or retract from this space. Further, the insufficient stroke of the arm 12 can be compensated for by exactly the length of the hand body 31. Next, the plate-shaped workpiece 40 between the upper die 41 and the lower die 42 is picked up by the suction pads 36 (see FIG. 1 etc.) and taken out from the press machine 49. After this, this plate-shaped workpiece 40 is quickly conveyed toward the press machine 59 of the next process and arranged between the upper die 51 and the lower die 52 in the press machine 59.

When the robot 10 is used in this way, even when the plate shaped workpiece 40 taken out from between the upper die 41 and the lower die 42 is relatively heavy, it is possible to convey the plate-shaped workpiece over the allowable inertia moment of the case of the prior art, so the invention is particularly advantageous.

A preferred embodiment was used to explain the present invention, but a person skilled in the art would understand that the above changes and various other changes, deletions, and additions could be made without departing from the scope of the present invention.

**Claims**

1.  A robot handling system (10) using a robot hand (30) to convey a workpiece (40), including

    a first wrist element (24) provided at a front end (12a) of an arm (12) of the robot so as to be rotatable about a first axial line (J4) in the arm longitudinal direction,
    a second wrist element (25) provided at said first wrist element (24) so as to be rotatable about a second axial line (J5) substantially perpendicular to said first axial line (J4),
    a third wrist element (26) provided at said second wrist element (25) so as to be rotatable about a third axial line (J6) substantially perpendicular to said second axial line (J5), and
    a connecting means (60) connecting said third wrist element (26) and a hand body (31) of said robot hand (30), **characterized in that**
    said hand body (31) being arranged so that an inertia moment of said hand body (31) about the vertical axial line becomes larger than the inertia moments of said hand body (31) about the two mutually perpendicular horizontal axial lines,
    said connecting means (60) connecting said third wrist element (26) and said hand body (31) so that said third axial line (J6) of said third wrist element (26) and said hand body (31) are arranged in a horizontal plane, and
    a posture of said hand body (31) being changed about said vertical axial line in the state with said third axial line (J6) of said third wrist element (26) arranged in the horizontal plane.

2.  A robot handling system (10) using a robot hand (30) to convey a workpiece (40), including
    a first wrist element (24) provided at a front end (12a) of an arm (12) so as to be rotatable about a first axial line (J4) in the arm longitudinal direction,
    a second wrist element (25) provided at said first wrist element (24) so as to be rotatable about a second axial line (J5) substantially perpendicular to said first axial line (J4),
    a third wrist element (26) provided at said second wrist element (25) so as to be rotatable about a third axial line (J6) substantially perpendicular to said second axial line (J5), and
    a connecting means (60) connecting said third wrist element (26) and a hand body (31) of said robot hand (30), **characterized in that**
    said hand body (31) being arranged so that an inertia moment of said hand body (31) about the axial line perpendicular to a first plane at which said hand body (31) is arranged becomes larger than the inertia moments about the two mutually perpendicular axial lines included in said first plane,
    said connecting means (60) connecting said third wrist element (26) and said hand body (31) so that a second plane in which said third axial line (J6) of said third wrist element (26) is included and said first plane become parallel, and
    a posture of said hand body (31) being changed about said axial line perpendicular to said first plane in the state with said third axial line (J6) of said third wrist element (26) being included in the second plane.

3.  A robot handling system as set forth in claim 1 or 2, wherein said connecting means (60) is an L-shaped bracket.

4.  A robot handling system as set forth in any one of claims 1 to 3, wherein
    said hand body (31) of said robot hand (30) is an elongated flat member and
    a plate shaped workpiece (40) processed in a first press machine (49) is taken out in a state held generally horizontal and conveyed to a second press machine (59).

# Fig.1

# Fig.2

# Fig.3

# Fig.4

# Fig.5

# Fig.6

**European Patent Office**

## EUROPEAN SEARCH REPORT

Application Number

EP 06 00 4141

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PATENT ABSTRACTS OF JAPAN vol. 018, no. 679 (M-1728), 21 December 1994 (1994-12-21) -& JP 06 270084 A (AMADA METRECS CO LTD), 27 September 1994 (1994-09-27) * abstract; figure 1 * ----- | 1-4 | INV. B25J9/04 |
| D,Y | PATENT ABSTRACTS OF JAPAN vol. 2000, no. 19, 5 June 2001 (2001-06-05) -& JP 2001 030190 A (NACHI FUJIKOSHI CORP), 6 February 2001 (2001-02-06) * abstract; figure 2 * ----- | 1-4 | |
| A | US 4 661 040 A (CIGNA ET AL) 28 April 1987 (1987-04-28) * column 3, lines 13-33; figures 1,2 * ----- | 1-4 | |
| | | | TECHNICAL FIELDS SEARCHED (IPC) B25J |

The present search report has been drawn up for all claims

| Place of search | Date of completion of the search | Examiner |
|---|---|---|
| Munich | 1 June 2006 | Grenier, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 06 00 4141

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2006

| Patent document cited in search report | | Publication date | Patent family member(s) | | Publication date |
|---|---|---|---|---|---|
| JP 06270084 | A | 27-09-1994 | NONE | | |
| JP 2001030190 | A | 06-02-2001 | NONE | | |
| US 4661040 | A | 28-04-1987 | DE | 3445003 A1 | 20-06-1985 |
| | | | DE | 8436125 U1 | 20-07-1989 |
| | | | FR | 2556274 A1 | 14-06-1985 |
| | | | GB | 2151206 A | 17-07-1985 |
| | | | SE | 456231 B | 19-09-1988 |
| | | | SE | 8406268 A | 13-06-1985 |

EPO FORM P0459

For more details about this annex : see Official Journal of the European Patent Office, No. 12/82

**EP 1 704 969 A1**

## REFERENCES CITED IN THE DESCRIPTION

### Patent documents cited in the description

- JP 2001030190 A

- JP 2002307342 A